Europäisches Patentamt

European Patent Office

Office européen des brevets

(19)

(11) Publication number: **0 282 128 B1**

## EUROPEAN PATENT SPECIFICATION

(45) Date of publication of patent specification: **13.05.92**  (51) Int. Cl.⁵: **A01F  15/08**

(21) Application number: **88200383.3**

(22) Date of filing: **01.03.88**

(54) **Round baler with system for monitoring bale shape.**

(30) Priority: **03.03.87 US 21060**

(43) Date of publication of application:
**14.09.88 Bulletin  88/37**

(45) Publication of the grant of the patent:
**13.05.92 Bulletin  92/20**

(84) Designated Contracting States:
**DE FR GB**

(56) References cited:
**EP-A- 0 037 155      EP-A- 0 060 956**
**FR-A- 2 360 484      FR-A- 2 579 063**
**GB-A- 2 044 170      US-A- 4 517 795**

(73) Proprietor: **FORD NEW HOLLAND, INC. (a Delaware corp.)**
**500 Diller Avenue**
**New Holland Pennsylvania 17557(US)**

(72) Inventor: **Sheehan, Ronald T.**
**2166 Coventry Road**
**Lancaster, PA 17557(US)**
Inventor: **Schlotterbeck, Stephen C.**
**Route 2**
**New Holland, PA 17557(US)**
Inventor: **Vanginhoven, Robert M.**
**14 Horseshoe Drive**
**Lancaster, PA 17557(US)**

(74) Representative: **Vandenbroucke, Alberic T.J.**
**FORD NEW HOLLAND N.V. Leon Claeys-straat, 3A**
**B-8210 Zedelgem(BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

This invention relates generally to round balers and, in particular, to a system for monitoring bale shape in round balers.

During operation of a round baler, it is often necessary to weave the round baler back and forth in a zigzag pattern on the windrow of crop material being picked up and baled. This is because the windrows of crop material are typically much narrower in width than the pickups and the baling chambers of round balers. Without the weaving action, there is a tendency for the bales formed in round balers to be barrel-shaped instead of uniformly cylindrical. Although the proper weaving of a round baler in a zigzag pattern overcomes the problem of poorly shaped bales, it requires that the operator constantly remembers when to weave the baler. This causes operator fatigue.

To overcome this problem, FR-A-2.579.063 proposes a bale shape monitoring system for round balers which provides guidance to the operator for weaving the baler transversely across a windrow to be baled in response to any differential being detected in the diameters of a bale being formed at or adjacent the opposite ends thereof. According to this state-of-the-art, two sensor members are provided which are disposed to sense the diameters of said bale at said locations and which are coupled to indicator means in a manner to generate a signal therein when a difference in said diameters is detected. This signal serves as a guidance for the operator to weave the baler to another relative position. However, this prior art arrangement fails to generate any guiding signal when the bale which is being formed, tends to be barrel-shaped. This is, of course, unacceptable and it thus is the object of the present invention to provide an improved bale shape monitoring system for round balers which helps preventing the formation of poorly shaped bales while reducing operator fatigue.

According to the present invention a round baler is provided which is of the type having an expandable bale chamber delimited, at least in part, by bale forming means which, during bale formation, gradually move outwardly to provide for bale chamber expansion and which further also comprises bale shape monitor means including indicator means and actuator means operatively associated with said indicator means for generating signals therein to provide guidance to the operator for weaving the baler transversely across the width of a crop windrow to be baled to thereby facilitate the formation of well shaped roll bales; said baler being

characterized in that

said actuator means consist of a single sensor means which operatively is associated with said movable bale forming means and said indicator means in a manner to generate consecutive signals in said indicator means in response to the expanding movement of said bale forming means as the formation of a bale in the bale chamber progresses.

Said single sensor means operatively is connected, in a preferred embodiment of the present invention, to an arm means which itself operatively is associated with the expandable bale forming means for movement in unison therewith as the bale chamber expands during bale formation.

The bale shape monitor apparatus preferably comprises a magnetically activated switch and a plurality of spaced apart magnets operatively connected to the movable bale forming means for movement past said switch in unison with the movement of said bale forming means as the bale chamber expands during bale formation; the arrangement being such that, as any one of said magnets is positioned in the vicinity of said switch, the latter is activated thereby to generate a signal in the indicator means.

The indicator means preferably comprise first and second indicator lights which are alternately illuminated by the bale shape monitor apparatus.

The bale shape monitor means finally also may comprise means for preventing false signals to be generated in said indicator means. Said means for preventing false signals preferably comprise a time delay having an input connected to the switch and an output connected to a latching relay; said latching relay having one terminal connected to said first indicator light and another terminal connected to said second indicator light.

A round baler in accordance with the present invention will now be described in greater detail, by way of example, with reference to the accompanying drawings, in which :

Fig. 1 is a right side elevation view of a round baler embodying a bale shape monitoring system;

Fig. 2 is view of a portion of the round baler of Fig. 1 illustrating various components in another position;

Fig. 3 is an enlarged side elevation view of the bale shape monitor apparatus shown in Figs. 1 and 2 and which illustrates various components in one position in full lines and the same components in another position in phantom lines.

Fig. 4 is a sectional view taken along lines 4-4 in Fig. 3;

Fig. 5 is a schematic view of a bale shape monitoring system according to the present invention; and

Figs. 6 and 7 are diagrammatic plan views of a round baler during operation thereof and utilizing the system illustrated Figures 1 to 5.

The terms "forward", "rearward", "left" and "right" used in connection with the baler and/or components thereof are determined with reference to the direction of forward operative travel of the baler and should not be considered as limiting. Also the terms "upper" and "lower" are used principally throughout this specification for convenience and it should be understood that these terms equally are not intended to be limiting.

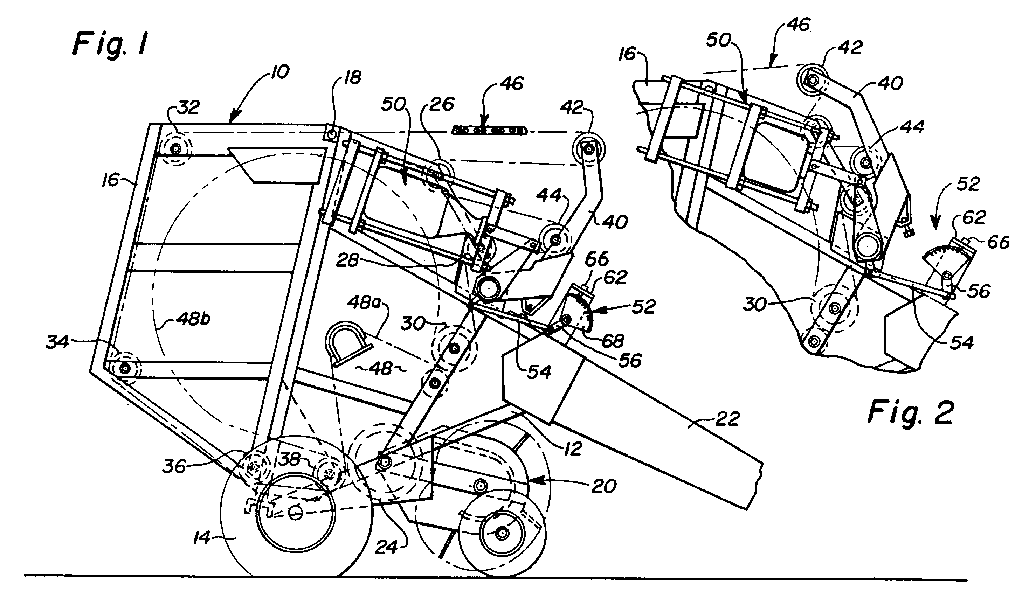

Referring to Fig. 1, the round baler 10 shown therein is generally of the type as disclosed in US-A-4.426.833, incorporated herein by reference. The round baler 10 includes a base frame 12 supported by a pair of wheels 14 and an auxiliary frame or tailgate 16 pivotally connected to the base frame 12 by stub shafts 18. A pickup mechanism 20 is mounted on the base frame 12 for picking up windrowed crop material, and a tongue 22 provided on the base frame 12 is adapted for connection to a tractor (not shown).

A floor roller 24 and guide members 26,28,30 are rotatably mounted on the base frame 12, and guide members 32,34,36,38 are rotatably mounted in the tailgate 16. An arm assembly 40 is rotatably mounted on the base frame 12 for rotational movement between a forward position shown in Fig. 1 and a rearward position shown in Fig. 2. The arm assembly 40 carries further rotatable guide members 42,44.

A flexible bale forming apron 46 is movably supported on the aforementioned guide members. The apron 46 may be of the chain and slat type as illustrated in Fig. 1 or the flat belt type. Since both of these apron types are well known, no further description thereof will be provided. The apron 46 has an inner course extending between the guide members 30 and 38 to define a bale forming chamber 48 which is expandable during bale formation. When the baler 10 is empty, the apron inner course is disposed in a wedge-shaped bale starting position 48a and the arm assembly 40, which assists in supporting the apron 46, is disposed in its forward position shown in Fig. 1. As a bale is formed in the baler 10, the bale forming chamber 48 expands while the apron inner course expands in length around the bale and the arm assembly 40 is moved toward its rearward position. When a full size bale has been formed in the baler 10, the apron inner course is disposed in the full bale position 48b and the arm assembly 40 is moved to its rearward position shown in Fig. 2. Air spring assemblies 50 are connected between the base frame 12 and the arm assembly 40 to urge the arm assembly 40 toward its forward position of Fig. 1. This maintains a predetermined amount of tension in the apron 46 during bale formation in order to control the density of bales formed in the round baler 10.

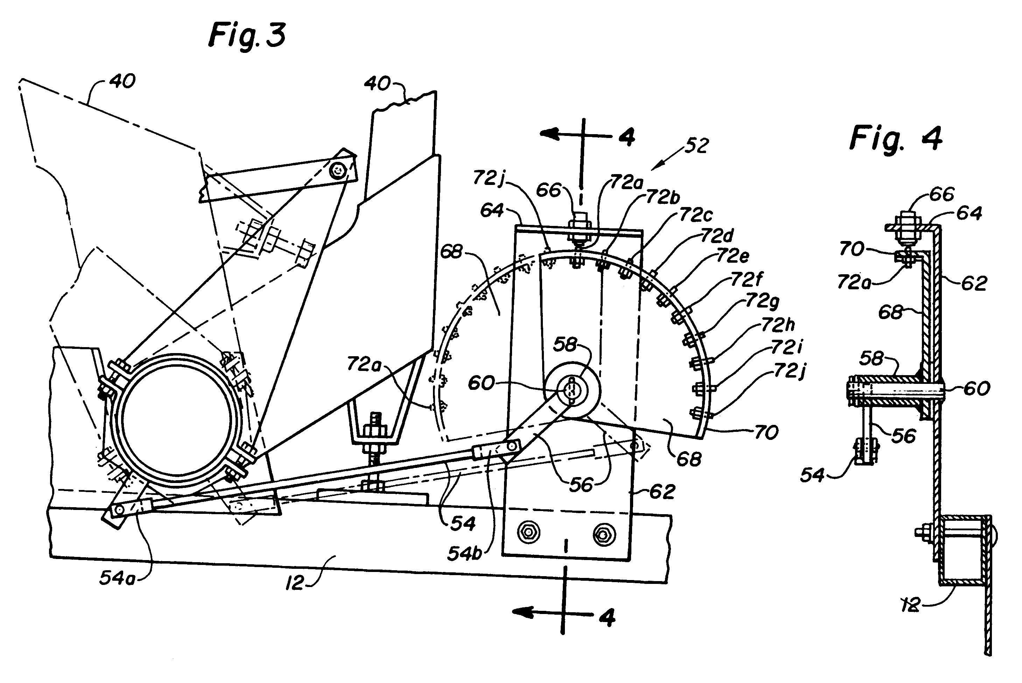

According to the present invention, a bale shape monitor apparatus 52 is provided which includes a link 54 pivotally connected at one end 54a to the arm assembly 40. The other end 54b of the link 54 is pivotally connected to a lever 56 as best seen in Figs. 3 and 4. The lever 56 is fixed to a sleeve 58 which is rotatably mounted on a stub shaft 60. The stub shaft 60 is fixed to a bracket 62 that is bolted to the base frame 12. The flange portion 64 of the bracket 62 supports a magnetically activated switch 66 (such as part No. 103SR12A-1 manufactured by Microswitch Inc). This particular type of switch 66 is commonly referred to as a hall effect switch. A plate 68 is fixed to the sleeve 58 and the arcuate flange portion 70 thereof supports a plurality of magnets 72a-72j.

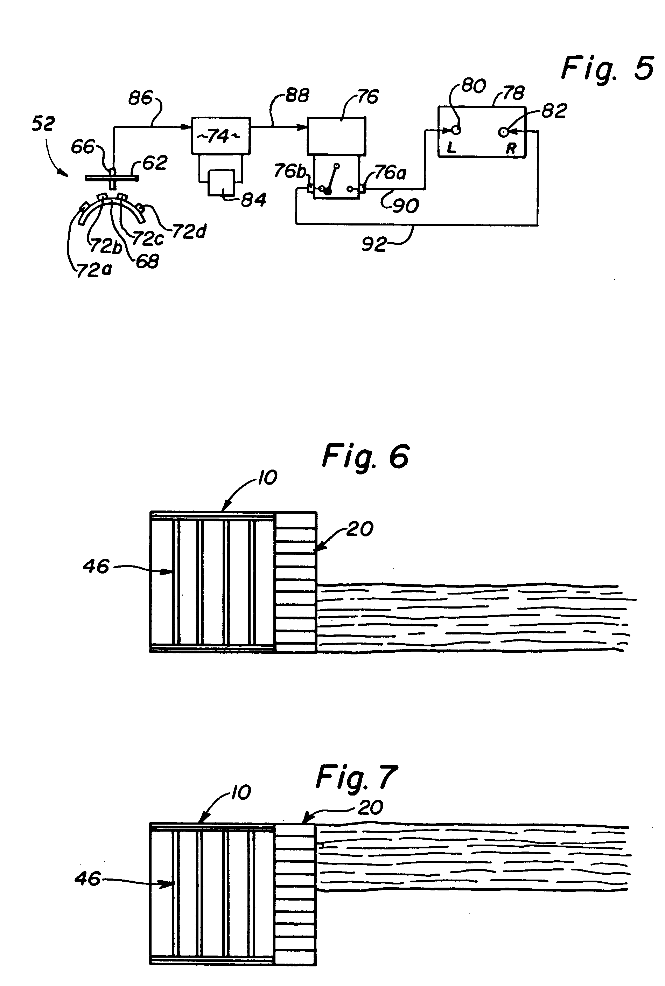

Referring now to Fig. 5, a system is illustrated therein which incorporates the aforedescribed bale shape monitor apparatus 52 and which further also includes a time delay 74 (such as part No. KD118 manufactured by Instrumentation and Control Systems Inc.), a latching relay 76 (such as part No. S89R11DBD1 manufactured by Potter and Brumfield) and an operator panel 78 with left and right indicator lights 80 and 82, respectively. The time delay 74 may be provided with an adjustable resistor 84 to allow adjustment of the time in a preselected range of, for example, 0.1 second to 10 seconds. The input of the time delay 74 is connected to the switch 66 by wiring 86, and the output of the time delay 74 is connected to the latching relay 76 by wiring 88. One terminal 76a of the latching relay 76 is connected by wiring 90 to the left indicator light 80 on the control panel 78 while the other terminal 76b of the latching relay 76 is connected by wiring 92 to the right indicator light 82 on the operator panel 78.

When the inner course of the apron 46 is in its bale starting position 48a and the arm assembly 40 is in its forward position as shown in Fig. 1, the various parts of the bale shape monitor apparatus 52 will be disposed in the positions shown in full lines in Fig. 3. The plate 68 will be positioned so that the first magnet 72a is in substantial alignment with the switch 66. The clearance between magnet 72a and the switch 66 is preferably between 1 and 7 mm. Activation of the system of Fig. 5 causes the right indicator light 82 to be illuminated while the left indicator light 80 is extinguished.

The operator then starts towing the baler 10 across a field along a windrow of crop material with the pickup 20 aligned to feed crop material into the right side of the bale forming chamber 48 as illustrated in Fig. 6. As the crop material is formed into a roll bale in the bale forming chamber 48, the inner course of apron 46 expands in length and the arm assembly 40 rotates from its forward position shown in Fig. 1 toward its rearward position shown in Fig. 2. This rotation of the arm assembly 40 causes rotation of the plate 68 carrying the magnets 72a- 72j in a counterclockwise direction in Fig. 3. When the plate 68 is rotated far enough so that the second magnet 72b (to the right of magnet 72a in Fig. 3) becomes substantially aligned with the switch 66, a signal is sent via the wiring 86 to activate the time delay 74. If the second magnet 72b remains substantially aligned with the switch 66 during the entire period of time (for example, 1 to 2 seconds) for which the time delay 74 is set, a signal is sent via the wiring 88 to actuate the latching relay 76. The latching relay 76 will then toggle from terminal 76b to terminal 76a thereby illuminating the left indicator light 80 via the wiring 90 and simultaneously extinguishing the right indicator light 82.

The operator then weaves the baler 10 toward the right along the windrow of crop material so that the pickup 20 is aligned to feed crop material into the left side of bale forming chamber 48 as illustrated in Fig. 7. As bale formation continues in the bale forming chamber 48, the arm assembly 40 continues to rotate toward its rearward position shown in Fig. 2 thereby causing further rotation of the plate 68 which is connected to the arm assembly 40 by the link 54 and the lever 56. This further rotation of the plate 68 results in the third magnet 72c (to the right of magnet 72b in Fig. 3) becoming substantially aligned with the switch 66. A signal is again sent via the wiring 86 to activate the time delay 74. Should the third magnet 72c remain in substantial alignment with the switch 66 for the duration of the setting of the time delay 74, another signal will be sent via the wiring 88 to cause the latching relay 76 to toggle back from terminal 76a to terminal 76b. This results in reillumination of the right indicator light 82 and simultaneous extinguishing of the left indicator light 80. The operator subsequently weaves the baler 10 back toward the left along the windrow of crop material so that the pickup 20 is again aligned to feed crop material into the right side of bale forming chamber 48.

As bale formation continues in the bale forming chamber 48, the arm assembly 40 will continue to be rotated toward its rearward position shown in Fig. 2. This rotation of the arm assembly 40 will cause the left and right indicator lights 80 and 82, respectively, to be alternately illuminated by the bale shape monitor apparatus 52. Consequently, the operator will be given an indication or signal when to weave the baler 10 to feed crop material into the other side of the bale forming chamber 48 of the baler 10. It will be understood that proper use of the system shown in Fig. 5 results in the formation of bales which are uniformly cylindrical across their width. Accordingly, the present invention prevents formation of poorly shaped bales while reducing operator fatigue.

The purpose of the time delay 74 is to prevent a false signal which may be caused by a bouncing motion of the arm assembly 40. During bale formation, the arm assembly 40 normally rotates smoothly from its forward position shown in Fig. 1 toward its rearward position shown in Fig. 2. However, under adverse conditions such as in the event of an egg-shaped bale (as seen when looking in the direction of the axis of the bale), the arm assembly 40 may bounce back and forth during its rotational movement. In order to ensure that the arm assembly 40 has rotated sufficiently far to a new position and is not in a bouncing motion, each of the magnets 72a-72j must remain substantially aligned with the switch 66 for the entire duration of the time setting of the time delay 74 or the time delay 74 will be automatically reset and there will be no change in the indicator lights 80 and 82.

It will be remarked that, although the above described baler 10 has bale forming means in the form of an apron chain 46 which extends across the full width of the bale chamber 48 and the bale shape monitor means 52, 74-92 are operably associated with said bale forming means via only one arm means 40, said bale shape monitor means 52, 74-92 nevertheless generate two distinct signals, one of which suggests to feed more crop material into one side of the bale chamber 48 and the other one of which suggests to feed more crop material into the opposite side of the bale chamber 48. In other words, even though the full width bale forming means 46 expand in a fully parallel manner during operation, the bale shape monitor means 52, 74-92 nevertheless generate said two distinct signals.

While that the preferred structure in which the principles of the present invention have been incorporated, is shown and described above, it is to be understood that the invention is not to be limited to the particular details thus presented but, in fact, widely different means may be employed in the practice of the broader aspects of this invention. As an example, the invention is not limited to a round baler having bale forming means in the form of an apron chain. Instead, the bale forming means equally well may be formed by an expandable apron belt which eventually may extend across the full width of the bale chamber 48. Alternatively the bale forming means may consist of a plurality of side-by-side extending belts which equally define an expandable bale forming chamber. In still another alternative arrangement the bale forming means may be formed by a plurality of roller members which extend across the full width of the bale chamber and which are movably mounted so as to permit bale chamber expansion during bale formation.

## Claims

1. A round baler (10) of the type having an expandable bale chamber (48) delimited, at least in part, by bale forming means (46) which, during bale formation, gradually move outwardly to provide for bale chamber expansion; said baler (10) further also comprising bale shape monitor means (52, 74-92) including indicator means (78, 80, 82) and actuator means (52) operatively associated with said indicator means (78, 80, 82) for generating signals therein to provide guidance to the operator for weaving the baler (10) transversely across the width of a crop windrow to be baled to thereby facilitate the formation of well shaped roll bales and said baler (10) being
    characterized in that
    said actuator means consist of a single sensor means (52) which operatively is associated with said movable bale forming means (46) and said indicator means (78, 80, 82) in a manner to generate consecutive signals in said indicator means (78, 80, 82) in response to the expanding movement of said bale forming means (46) as the formation of a bale in the bale chamber progresses.

2. A round baler (10) according to claim 1, characterized in that said bale forming means (46) comprise bale forming rollers extending across the full width of the bale chamber (48); said rollers being movably mounted for enabling said bale chamber expansion during bale formation.

3. A round baler (10) according to clam 1, characterized in that said bale forming means (46) comprise endless apron means which extend across the full width of the bale forming chamber (48).

4. A round baler (10) according to claim 3, characterized in that the apron means are formed by apron chain means (46).

5. A round baler (10) according to claim 3, characterized in that the apron means are formed by apron belt means.

6. A round baler (10) according to any of the preceding claims characterized in that an arm means (40) is operatively associated with the movable bale forming means (46) for movement in unison therewith as the bale chamber (48) expands during bale formation and the sensor means (52) operatively is connected to said arm means (40).

7. A round baler (10) according to any of the preceding claims characterized in that the sensor means (52) comprises a magnetically activated switch (66) and a plurality of spaced apart magnets (72a-j) operatively connected to the movable bale forming means (46) for movement past said switch (66) in unison with the movement of said bale forming means (46) as the bale chamber (48) expands during bale formation; the arrangement being such that, as any one of said magnets (72a-j) is positioned in the vicinity of said switch (66), the latter is activated thereby to generate a signal in the indicator means (78, 80, 82).

8. A round baler (10) according to claim 7 when appended to claim 6 and characterized in that the switch (66) is mounted on a stationary support (62) and the magnets (72a-j) are mounted on a mounting member (68) which is rotatably supported adjacent said stationary support (62) and which is coupled via linkage means (54) to said arm means (40).

9. A round baler (10) according to any of the preceding claims characterized in that the indicator means (78, 80, 82) comprise first and second indicator lights (80, 82) which alternately are illuminated by the sensor means (52).

10. A round baler (10) according any of the preceding claims characterized in that the bale shape monitor means (52, 74-92) further also comprise means (74, 76, 84) for preventing false signals to be generated in said indicator means (78, 80, 82).

11. A round baler (10) according to claim 10 when appended to either one of claims 7 and 8 via the intermediary of claim 9 and characterized in that the means (74, 76, 84) for preventing false signals comprise a time delay (74) having an input (86) connected to the switch (66) and an output (88) connected to a latching relay (76); said latching relay (76) having one terminal (76a) connected to said first indicator light (80) and another terminal (76b) connected to said second indicator light (82).

12. A round baler (10) according to claim 11 characterized in that the time delay (74) is adjustable within a preselected range.

## Revendications

1. Ramasseuse-presse à balles rondes (10) du type comportant une chambre à balles extensible (48) délimité, au moins en partie, par, des moyens de formage de balles (46) qui, pendant la formation d'une balle, se déplacent progressivement vers l'extérieur pour permettre une extension de la chambre à balles; ladite ramasseuse-presse (10) comportant également des moyens de contrôle de forme de balles (52, 74-92) comprenant des moyens indicateurs (78, 80, 82) et des moyens d'actionnement (52) associés d'une manière fonctionnelle auxdits moyens indicateurs (78, 80, 82) en vue d'y générer des signaux, afin de fournir à l'opérateur un guidage pour faire zigzaguer la ramasseuse-presse (10) transversalement sur la largeur d'un andain de récolte destiné à être mis en balles, en vue de faciliter ainsi la formation de balles cylindriques bien formées, ladite ramasseuse-presse (10) étant

   caractérisée en ce que

   lesdits moyens d'actionnement consistent en un moyen détecteur unique (52) associé d'une manière fonctionnelle auxdits moyens de formage de balles mobiles (46) et auxdits moyens indicateurs (78, 80, 82), de manière à générer dans lesdits moyens indicateurs (78, 80, 82) des signaux consécutifs en réponse au mouvement d'extension desdits moyens de formage de balles (46), au fur et à mesure que la formation d'une balle progresse dans la chambre à balles.

2. Ramasseuse-presse à balles rondes (10) selon la revendication 1, caractérisée en ce que lesdits moyens de formage de balles (46) comportent des rouleaux de formage de balles qui s'étendent sur toute la largeur de la chambre à balles (58); lesdits rouleaux étant montés mobiles en vue de permettre ladite extension de la chambre à balles pendant la fomation d'une balle.

3. Ramasseuse-presse à balles rondes (10) selon la revendication 1, caractérisée en ce que lesdits moyens de formage de balles (46) comportent des moyens formant tapis sans fin qui s'étendent sur toute la largeur de la chambre de formage de balles (48).

4. Ramasseuse-presse à balles rondes (10) selon la revendication 3, caractérisée en ce que les moyens formant tapis sont constitués par des moyens formant tapis à chaînes.

5. Ramasseuse-presse à balles rondes (10) selon la revendication 3, caractérisée en ce que les moyens formant tapis sont constitués par des moyens formant tapis à courroie.

6. Ramasseuse-presse à balles rondes (10) selon l'une quelconque des revendications précédentes, caractérisée en ce qu'un moyen formant bras (40) est associé d'une manière fonctionnelle aux moyens de formage de balles mobiles (46) en vue de se déplacer en synchronisme avec ceux-ci au fur et à mesure que la chambre à balles (46) se détend pendant la formation d'une balle, le moyen détecteur (52) étant relié d'une manière fonctionnelle audit moyen formant bras (40).

7. Ramasseuse-presse à balles rondes (10) selon l'une quelconque des revendications précédentes, caractérisée en ce que le moyen détecteur (52) comporte un commutateur actionné magnétiquement (66) et plusieurs aimants (72a-j) espacés les uns des autres, qui sont reliés d'une manière fonctionnelle le aux moyens de formage de balles mobiles (46) en vue de se déplacer, en passant devant ledit commutateur (66), en synchronisme avec le déplacement desdits moyens de formage de balles (46), au fur et à mesure que la chambre à balles (48) se détend pendant la formation d'une balle; le dispositif étant tel que, lorsque l'un quelconque desdits aimants (72a-j) est positionné à proximité dudit commutateur (66), ce dernier est actionné pour ainsi générer un signal dans les moyens indicateurs (78, 80, 82).

8. Ramasseuse-presse à balles rondes (10) selon la revendication 7, lorsque celle-ci est dépendante de la revendication 6, et caractérisée en ce que le commutateur (66) est monté sur un support fixe (62), tandis que les aimants (72a-j) sont montés sur un organe de montage (68) supporté mobile en rotation à proximité dudit support fixe (62) et relié audit moyen formant bras (40) par l'intermédiaire de moyens formant tringlerie (54).

9. Ramasseuse-presse à balles rondes (10) selon l'une quelconque des revendications précédentes, caractérisée en ce que les moyens indicateurs (78, 80, 82) comportent des premier et second voyants lumineux (80, 82) qui sont allumés alternativement par le moyen détecteur (52).

10. Ramasseuse-presse à balles rondes (10) selon l'une quelconque des revendications précédentes, caractérisée en ce que les moyens de contrôle de forme de balles (52, 74-92) comportent également des moyens (74, 76, 84) destinés à éviter que de faux signaux ne soient générés dans lesdits moyens indicateurs (78, 80, 82).

11.  Ramasseuse-presse à balles rondes (10) selon la revendication 10, lorsque celle-ci est dépendante de l'une ou l'autre des revendications 7 et 8 par l'intermédiaire de la revendication 9, et caractérisée en ce que les moyens (74, 76, 84) destinés à éviter de faux signaux comportent un dispositif de temporisation (74) qui a une entrée (86) reliée au commutateur (66) et une sortie (88) reliée à un relais de verrouillage (76); ledit relais de verrouillage (76) ayant l'une (76a) de ses bornes raccordée audit premier voyant lumineux (80), tandis que son autre borne (76b) est raccordée audit second voyant lumineux (82).

12.  Ramasseuse-presse à balles rondes (10) selon la revendication 11, caractérisée en ce que le dispositif de temporisation (74) est ajustable à l'intérieur d'une place présélectionnée.

**Patentansprüche**

1.  Rundballenpresse (10) mit einer ausdehnbaren Ballenkammer (48), die zumindestens teilweise durch Ballenformungseinrichtungen (46) umgrenzt ist, die sich während der Ballenbildung graduell nach außen bewegen, um die Ausdehnung der Ballenkammer zu ermöglichen, wobei die Ballenpresse (10) weiterhin eine Ballenform-Überwachungseinrichtung (52, 74-92) umfaßt, die Anzeigeeinrichtungen (78, 80, 82) und betriebsmäßig mit den Anzeigeeinrichtungen (78, 80, 82) verbundene Betätigungseinrichtungen (52) zur Erzeugung von Signalen an den Anzeigeeinrichtungen umfaßt, um der Bedienungsperson eine Anleitung zu geben, wie die Rundballenpresse (10) in Querrichtung über die Breite des zu dem Rundballen zu formenden Erntematerialschwades hin- und herbewegt werden sollte, um auf diese Weise die Bildung gut geformter Rundballen zu erleichtern, und wobei die Rundballenpresse (10) dadurch **gekennzeichnet** ist, daß die Betätigungseinrichtungen aus einer einzigen Meßfühlereinrichtung (52) bestehen, die betriebsmäßig mit den beweglichen Ballenformungseinrichtungen (46) und den Anzeigeeinrichtungen (78, 80, 82) derart verbunden ist, daß aufeinanderfolgende Signale an den Anzeigeeinrichtungen (78, 80, 82) in Abhängigkeit von der Ausdehnungsbewegung der Ballenformungseinrichtungen (46) während der fortschreitenden Bildung des Rundballens in der Ballenkammer erzeugt werden.

2.  Rundballenpresse (10) nach Anspruch 1, dadurch **gekennzeichnet,** daß die Ballenformungseinrichtungen (46) Ballenformungswalzen umfassen, die sich über die volle Breite der Ballenkammer (48) erstrecken, und daß die Walzen beweglich befestigt sind, um die Ballenkammerausdehnung während der Ballenformung zu ermöglichen.

3.  Rundballenpresse (10) nach Anspruch 1, dadurch **gekennzeichnet,** daß die Ballenformungseinrichtungen (46) endlose Förderbandeinrichtungen umfassen, die sich über die volle Breite der Ballenformungskammer (48) erstrecken.

4.  Rundballenpresse (10) nach Anspruch 3, dadurch **gekennzeichnet,** daß die Förderbandeinrichtungen durch Förderketteneinrichtungen (46) gebildet sind.

5.  Rundballenpresse (10) nach Anspruch 3, dadurch **gekennzeichnet,** daß die Förderbandeinrichtungen durch Förderriemenelemente gebildet sind.

6.  Rundballenpresse (10) nach einem der vorhergehenden Ansprüche, dadurch **gekennzeichnet,** daß ein Armteil (40) betriebsmäßig mit den beweglichen Ballenformungseinrichtungen (46) für eine Bewegung zusammen mit diesen verbunden ist, während sich die Ballenkammer (48) während der Ballenformung ausdehnt, und daß die Meßfühlereinrichtung (52) betriebsmäßig mit den Armteilen (40) verbunden ist.

7.  Rundballenpresse (10) nach einem der vorhergehenden Ansprüche, dadurch **gekennzeichnet,** daß die Meßfühlereinrichtung (52) einen magnetisch betätigten Schalter (66) und eine Mehrzahl von mit Abstand angeordneten Magneten (72a-j) umfaßt, die betriebsmäßig mit den beweglichen Ballenformungseinrichtungen (46) für eine Bewegung an dem Schalter (46) vorbei bei der Bewegung der Ballenformungseinrichtungen (46) verbunden sind, während sich die Ballenkammer (48) während der Ballenformung ausdehnt, und daß die Anordnung derart ist, daß dann, wenn irgendeiner der Magnete (72a-j) in der Nähe des Schalters (66) angeordnet ist, der letztere aktiviert wird, um auf diese Weise ein Signal an den Anzeigeeinrichtungen (78, 80, 82) zu erzeugen.

**8.** Rundballenpresse (10) nach Anspruch 7 unter Rückbeziehung auf Anspruch 6, dadurch **gekennzeichnet,** daß der Schalter (66) auf einer stationären Halterung (62) befestigt ist und dap die Magnete (72a-j) auf einem Befestigungsteil (68) befestigt sind, das benachbart zu der stationären Halterung (62) drehbar gehaltert und über Gestängeteile (54) mit den Armteilen (40) verbunden ist.

**9.** Rundballenpresse (10) nach einem der vorhergehenden Ansprüche, dadurch **gekennzeichnet,** daß die Anzeigeeinrichtungen (78, 80, 82) erste und zweite Anzeigelampen (80, 82) umfassen, die durch die Meßfühlereinrichtung (52) abwechselnd eingeschaltet werden.

**10.** Rundballenpresse (10) nach einem der vorhergehenden Ansprüche, dadurch **gekennzeichnet,** daß die Ballenform-Überwachungsvorrichtung (52, 74-92) weiterhin Einrichtungen (74, 76, 88) einschließt, die die Erzeugung von falschen Signalen in den Anzeigeeinrichtungen (78, 80, 82) verhindern.

**11.** Rundballenpresse (10) nach Anspruch 10 bei Rückbeziehung auf einen der Ansprüche 7 und 8 über Anspruch 9,
dadurch **gekennzeichnet,** daß die Einrichtungen (74, 76, 84) zur Verhinderung falscher Signale eine Zeitverzögerung (74) mit einem mit dem Schalter (66) verbundenen Eingang (86) und einem mit einem Speicherrelais (76) verbundenen Ausgang (88) umfassen, und daß das Speicherrelais (76) einen mit der ersten Anzeigelampe (80) verbundenen Anschluß (76a) und einen weiteren mit der zweiten Anzeigelampe (82) verbundenen Anschluß (76b) aufweist.

**12.** Rundballenpresse (10) nach Anspruch 11, dadurch **gekennzeichnet,** daß die Zeitverzögerung (74) innerhalb eines vorausgewählten Bereiches einstellbar ist.

*Fig. 1*

*Fig. 2*

EP 0 282 128 B1

# Fig. 3

# Fig. 4

EP 0 282 128 B1

*Fig. 5*

*Fig. 6*

*Fig. 7*